# EUROPÄISCHE PATENTSCHRIFT

(11) **EP 1 209 380 B1**
(45) Veröffentlichungstag und Bekanntmachung des Hinweises auf die Patenterteilung: **01.03.2006**
(21) Anmeldenummer: 01125516.3
(22) Anmeldetag: 25.10.2001
(51) Int. Cl.: F16H 61/00, F16H 9/18, F16H 55/56

(54) **Kegelscheibengetriebe**
Pulley type speed-shifting device
Variateur à poulies

(30) Priorität: 24.11.2000 DE 10058475
(43) Veröffentlichungstag der Anmeldung: 29.05.2002
(73) Patentinhaber: PIV Drives GmbH, 61352 Bad Homburg (DE)
(72) Erfinder: Heinrich, Johannes, Dr.-Ing., 61381 Friedrichsdorf/Ts. (DE); Schönnenbeck, Gert, Dr.-Ing., 61267 Neu-Anspach (DE); Wagner, Peter, Dr.-Ing., 35444 Biebertal (DE); Matzig, Rainer, 61462 Königstein (DE)
(74) Vertreter: Petersen, Frank

(56) Entgegenhaltungen:
- WO-A-99/54647
- DE-A- 4 300 879
- US-A- 3 722 308
- PATENT ABSTRACTS OF JAPAN vol. 012, no. 206 (M-708), 14. Juni 1988 (1988-06-14) & JP 63 009767 A (DAIHATSU MOTOR CO LTD), 16. Januar 1988 (1988-01-16)

## Beschreibung

Die Erfindung betrifft ein Kegelscheibengetriebe mit stufenloser Übersetzungseinstellung und Erzeugung axialer Anpresskräfte der Kegelscheiben auf ein zwischen diesen umlaufendes Zugmittel über Spannmittel, die auf den Getriebewellen angeordnet axial auf je eine auf der jeweiligen Getriebewelle axial verschiebbare Kegelscheibe wirken, wobei auf einer ersten Getriebeseite hydraulische Spannmittel zur Einstellung und Aufrechterhaltung der Getriebeübersetzung und auf der zweiten Getriebeseite eine gegen ein wellenfestes Widerlager abgestützte Feder als Spannmittel vorgesehen sind.

Ein derartigesgattungbildendes Kegelscheibengetriebe ist unter anderem durch die DE 43 00 879 bekannt. Es findet in den Fällen Verwendung, wo ein kostengünstiges Getriebe für Kleinfahrzeuge und einfache industrielle Anwendungen gewünscht ist. Nachteilig ist bei dem bekannten Getriebe jedoch die Unfähigkeit, belastungsabhängige Anpresskräfte zwischen Kegelscheiben und Zugmittel zu erzeugen. Vielmehr bestimmt die auf einer der Getriebeseiten die Anpresskraft erzeugende Feder die Leistungsgrenze des Getriebes. Mit anderen Worten bedeutet dies, dass für eine bestimmte maximale durch das Getriebe übertragbare Leistung die Feder entsprechend ausgelegt sein muss, was dazu führt, dass das Getriebe bei niedrigerer Leistungsübertragung mit Überanpressung zwischen Kegelscheiben und Zugmittel und dadurch mit mehr oder weniger großem Verlust arbeitet.

Zur lastabhängigen und damit möglichst verlustfreien Erzeugung der genannten Anpresskräfte ist es bekannt, die Anpresskräfte auf beiden Getriebeseiten entsprechend gesteuert ausschließlich hydraulisch aufzubringen. Eine andere Möglichkeit besteht in der rein mechanischen Erzeugung der Anpresskräfte mit Hilfe sogenannter Anpresseinrichtungen.

Eine dritte Möglichkeit besteht in der Kombination dieser beiden Systeme, wie sie beispielsweise Gegenstand der DE 2 016 181 und DE 2 058 399 ist. Dort werden auf beiden Getriebeseiten die Anpresskräfte lastabhängig durch Anpresseinrichtungen der genannten Art erzeugt, wobei diesen eine hydraulische Anpresskrafterzeugung zur Einstellung und Aufrechterhaltung der Getriebeübersetzung parallel geschaltet ist. Konstruktiv bedeutet dies, dass die jeweils axial verschiebbare Kurvenmuffe der Anpresseinrichtungen auf einem verlängerten Hals der zur Variation der Getriebeübersetzung axial verschiebbaren Kegelscheibe ebenfalls axial verschiebbar gelagert ist und durch eine zwischenverschiebbare Kurvenmuffe und benachbarter Kegelscheibe angeordnete Druckfeder in Richtung auf die wellenfeste Kurvenmuffe der Anpresseinrichtung belastet ist. Diese Bauform ist insbesondere in Radialrichtung sehr platzgreifend und daher für einfache Kegeischeibengetriebe zu kostspielig, insbesondere auch im Hinblick auf den Umfang der zur Einstellung und Aufrechterhaltung der Getriebeübersetzung erforderlichen hydraulischen Steuerung.

Aufgabe der Erfindung ist es, ein Kegelscheibengetriebe der eingangs genannten Art aus Gründen der Schaffung eines besseren Wirkungsgrades mit einer mechanischen Einrichtung zu lastabhängigen Erzeugung der Anpresskräfte auszustatten, ohne dass dadurch insbesondere in Radialrichtung der betroffenen Getriebeseite ein erhöhter Platzbedarf erforderlich wird.

Diese Aufgabe ist erfindungsgemäß durch die Merkmale des Anspruches 1 gelöst.

Durch diese erfindungsgemäßen Maßnahmen ist nunmehr für die Getriebeseite mit mechanischer Erzeugung der Anpresskräfte erreicht, dass diese Anpresskräfte lastabhängig und damit nur in dem Umfang erzeugt werden, wie dies im Augenblick für die Leistungsübertragung durch das Getriebe erforderlich ist. Die Aufgabe der nunmehr zur Anpresseinrichtung parallel geschalteten Feder ist auf die Erzeugung einer Grundanpressung zurückgenommen für den Fall, dass sich das Getriebe im Leerlauf befindet und folglich durch die Anpresseinrichtung keine Anpresskraft erzeugt wird. Damit kann das Getriebe ohne Erzeugung besonderer Verluste arbeiten.

Dadurch, dass nunmehr die axial verschiebbare Kurvenmuffe der Anpresseinrichtung in das freie Ende der verlängerten Nabe der zugeordneten Kegelscheibe integriert ist, ergibt sich eine in Radialrichtung vergleichsweise keinen zusätzlichen Platzaufwand erfordernde Bauweise. Insbesondere ist es nicht wie im vorstehend geschilderten bekannten Falle erforderlich, die axial verschiebbare Kurvenmuffe der Anpresseinrichtung als zusätzliches Bauteil radial außerhalb auf der verlängerten Nabe der axial verschiebbaren Kegelscheibe anzuordnen.

Da, wie gesagt, die axial verschiebbare Kurvenmuffe der Anpresseinrichtung nunmehr integraler Bestandteil der axial verschiebbaren Kegelscheibe ist, bedeutet dies, dass diese Kurvenmuffe immer eine solche axiale Stellung einnimmt, wie dies der übersetzungsabhängigen Axialstellung der verschiebbaren Kegelscheibe entspricht. Dadurch bestünde die Möglichkeit, dass die Rollkörper bei unbelastetem Getriebe eine Position im Kurvengrund der von den Kurvenmuffen gebildeten Kurvenbahnen einnehmen, was bei Wiederbelastung zum Durchdrehen der Kurvenmuffen führen könnte zumindest bei solchen Übersetzungsstellungen des Getriebes, bei denen die Kegelscheiben der zweiten Getriebeseite nahe beieinanderstehen. Um dies zu verhindern, ist entsprechend dem weiteren Merkmal der Erfindung dafür gesorgt, dass die Rollkörper auch im Falle eines unbelasteten, also leerlaufenden Getriebes stets im Bereich der axialen Mitte zwischen den Kurvenmuffen gehalten sind.

In an sich bekannter Weise hat es sich als zweckmäßig erwiesen, dass die Kegelscheiben der zweiten Getriebeseite auf einer auf der Getriebewelle drehbar aber axial unverschiebbar gelagerten Hohlwelle angeordnet sind, dass die axial feste Kegelscheibe mit der Hohlwelle starr verbunden ist, dass die axial bewegliche Kegelscheibe mit der Hohlwelle drehverbunden ist, und dass die wellenfeste Kurvenmuffe neben der Hohlwelle auf der Getriebewelle drehfest und wenigstens von der ihr gegenüberliegenden Kurvenmuffe fort axial unverschiebbar angeordnet ist, wobei die axial feste Kegelscheibe mit der Hohlwelle einstückig verbunden sein kann.

In Ausgestaltung der Erfindung ist es vorteilhaft, dass die Rollkörper über radial zur Getriebewelle von ihnen vorstehende, zu ihren Drehachsen koaxiale Zapfen mit entsprechenden Ausnehmungen der Ringe in Eingriff sind. Dabei kann vorgesehen sein, dass radial zur Getriebewelle innerhalb oder außerhalb der Rollkörper ein zur Welle koaxialer Haltering angeordnet ist, und dass die Zapfen der Rollkörper in zur Getriebewelle radialen Bohrungen des Halteringes drehbar gelagert sind.

Hier kann nach einer Bauform die Anordnung so getroffen werden, dass radial zur Getriebewelle außerhalb der Rollkörper ein diese und die verlängerte Nabe umfangender Führungsring in Form einer hohlzylindrischen Hülse angeordnet ist, dass der Führungsring auf der verlängerten Nabe axial verschiebbar aber dieser gegenüber undrehbar gelagert ist, dass nach außen vorstehende Zapfen der Rollkörper in sich entlang einer Radialebene der Getriebewelle erstreckenden, in ihrer axialen Breite dem Durchmesser der Zapfen entsprechenden Umfangsschlitzen des Führungsringes drehbar gelagert und im Bereich der axialen Mitte zwischen den Kurvenmuffen gehalten sind, dass in Umfangsrichtung die Länge der Umfangsschlitze wenigstens der Hälfte des maximalen gegenseitigen Umfangsweges der Kurvenmuffen der Anpresseinrichtung entspricht, und dass der Führungsring mit seinem der axial beweglichen Kegelscheibe zugewandten Ende derart an der Feder angelenkt ist, dass er gleichgerichtet jeweils im wesentlichen die Hälfte des Axialweges der beweglichen Kegelscheibe ausführt.

Dazu kann vorgesehen sein, dass die Feder einerseits gegen die axial bewegliche Kegelscheibe und andererseits gegen die wellenfeste Kurvenmuffe abgestützt ist. Mehr ins einzelne kann die Anordnung so getroffen werden, dass die Feder ein im wesentlichen zur Hälfte auf der Nabe, zur anderen Hälfte auf dem Führungsring angeordnetes Tellerfederpaket ist, dass die Feder gegen die Kurvenmuffe über ein den Führungsring umfangendes, hohlzylindrisches Zwischenstück abgestützt ist, und dass der Führungsring mit einem endständigen, nach radial außen gerichteten Bund zwischen den beiden Hälften des Tellerfederpaketes eingefangen ist.

Um sicher zu stellen, dass der Führungsring und damit auch die Umfangsschlitze die zu den Kurvenbahnen der Kurvenmuffe gehörende Position beibehält, ist es zweckmäßig, dass der Führungsring in seinem auf der Nabe angeordneten Abschnitt wenigstens eine zur Achse der Getriebewelle parallele Nut aufweist, in die ein von der Nabe getragener Stift zur Drehsicherung eingreift.

Die geschilderte erste Bauform sorgt also dafür, dass die Rollkörper auch bei unbelastetem Getriebe stets in gefederter Weise auf der axialen Mitte zwischen den beiden Kurvenmuffen der Anpresseinrichtung gehalten werden, sich andererseits aber durch den Führungsring ungehindert in dem notwendigen Maß in Umfangsrichtung mit den Kurvenbahnen der Anpresseinrichtung bewegen können. Dadurch ist sichergestellt, dass die Rollkörper immer auch dann mit den Kurvenbahnen wieder in Eingriff geraten, wenn das Getriebe aus dem Leerlauf wieder in einen Belastungszustand kommt.

Dieses Ergebnis erreicht auch eine zweite Bauform nach der Erfindung, gemäß der vorgesehen ist, dass radial zur Getriebewelle außerhalb der Rollkörper ein diese umfangender Führungsring in Form wenigstens eines Paketes von axial nebeneinander angeordneten, ringförmigen Wellfedern mit entlang dem Umfang axial hin- und hergehenden Wellen angeordnet ist, dass dieser Führungsring axial zwischen einem von der Nabe und einem von der wellenfesten Kurvenmuffe getragenen, umlaufenden Bund eingefangen und axial mittig zur Anpresseinrichtung gehalten ist, und dass nach radial außen vorstehende Zapfen der Rollkörper im Bereich der axialen Mitte dieses Führungsringes drehbar gelagert sind. Hier ist also eine Bauform gefunden, bei der die axial mittige Positionierung der Rollkörper zwischen den Kurvenmuffen der Anpresseinrichtung unabhängig von der die Grundanpressung der axial verschiebbaren Kegelscheibe gewährleistenden Feder sichergestellt ist.

Dabei kann in Ausgestaltung dieses Lösungsweges vorgesehen sein, dass der Führungsring aus zwei gleichen, axial nebeneinander angeordneten Paketen von Wellfedern besteht, dass die Wellfedern jedes Paketes über aufeinander zu gerichtete Wellenberge gegeneinander abgestützt und fest miteinander verbunden sind, und dass die Zapfen der Rollkörper zwischen den Wellfederpaketen drehbar gelagert sind. Um letzteres zu erreichen, ist es zweckmäßig, dass der Haltering außerhalb der Rollkörper zwischen diesen und dem Führungsring aus Wellfedern angeordnet ist und dass der Haltering einen axial mittig von ihm nach radial außen vorstehenden, umlaufenden und zwischen die Wellfederpakete greifenden Bund aufweist. Dabei können die Bohrungen des Halteringes für die Zapfen der Rollkörper auch den Bund durchqueren. Entspricht nach einem weiteren Merkmal der Erfindung die axiale Breite des Bundes der Dicke der Rollkörperzapfen, so bleiben von dem Bund in Umfangsrichtung gesehen zwischen den Zapfen benachbarter Rollkörper nur noch Umfangsabschnitte stehen, womit sich eine besonders Platz- und gewichtssparende Bauform verbindet.

Was bei dieser zweiten Bauform die die Grundanpressung der axial verschiebbaren Kegelscheibe sicherstellende Feder betrifft, so kann diese auf der Nabe angeordnet und einerseits gegen die axial bewegliche Kegelscheibe, andererseits über ein den Führungsring übergreifendes, im wesentlichen hohlzylindrisches Zwischenstück gegen die wellenfeste Kurvenmuffe abgestützt sein, wobei vorgesehen sein kann, dass der von der wellenfesten Kurvenmuffe für den Führungsring getragene Bund und das Zwischenstück zu einem Bauteil vereinigt sind.

Ein Kegelscheibengetriebe der hier in Rede stehenden Gattung bedingt, dass bei einer Änderung der Getriebeübersetzung, die eine Entleerung des auf der ersten Getriebeseite angeordneten Druckzylinders erfordert, die dazu notwendige Axialkraft sich über das Zugmittel aus der auf der zweiten Getriebeseite auf das Zugmittel ausgeübten Anpresskraft ergibt. Diese Kraft ist auch für eine schnelle Verstellung der Getriebeübersetzung ausreichend, wenn das Getriebe unter normalen Belastungsbedingungen arbeitet. Befindet sich jedoch das Getriebe im Stillstand oder im Leerlauf, so wirkt auf der zweiten Getriebeseite nur die die Grundanpressung sicherstellende Feder. Die von dieser ausgeübte und auf dem Weg zur ersten Getriebeseite auch noch durch Reibkrafteinflüsse herabgesetzte Kraft reicht jedoch in den genannten Fällen nur zu einer verhältnismäßig langsamen Verstellung der Getriebeübersetzung aus, wobei noch hinzukommt, dass das aus dem Druckzylinder auszuschiebende Druckmittel noch das dazu entsprechend eingestellte Steuerventil unter Überwindung entsprechender Widerstände passieren muss.

Um dem zu begegnen, ist in Weiterbildung der Erfindung vorgesehen, dass in der Druckmittelzuflussleitung ein Umsteuerventil angeordnet ist, und dass durch das Umsteuerventil der Druckraum mit dem Druckmittelvorrat oder der Saugseite einer Druckmittelpumpe verbindbar ist. Diese Maßnahme hat die Wirkung, dass das Druckmittel aus dem Druckzylinder zumindest ungehindert abfließen kann, wobei ein solcher Abfluss sich ohne Probleme im Querschnitt entsprechend groß bemessen lässt, oder dass das Druckmittel sogar aus dem Druckzylinder abgesaugt wird, die Verstellung der Getriebeübersetzung also noch aktiv gefördert wird.

Es versteht sich von selbst, dass die Betätigung des Umsteuerventils abgeleitet aus den übrigen Randbedingungen des Getriebes zumindest für die genannten kritischen Fälle erfolgt. Dazu kann vorgesehen sein, dass das Umsteuerventil durch die Steuerung für das Steuerventil betätigbar ist, wobei dieser Steuerung die für das Arbeiten des Getriebes erforderlichen Bestimmungsgrößen zugehen. Allerdings macht dies noch ein besonderes, von der Steuerung angesprochenes Betätigungsglied erforderlich. Eine andere Möglichkeit kann daher auch dadurch gegeben sein, dass das Umsteuerventil durch den in der Druckmittelzuflussleitung herrschenden Druckmittel druckbetätigbar ist. Da dieser Druckmitteldruck sich aus der von der Steuerung verursachten Stellung des Steuerventils ergibt, ist damit bereits automatisch auch eine entsprechende Bestimmungsgröße für die Einstellung des Umsteuerventils gegeben. Diese ergibt sich dann aber bei dieser Ausführungsform auch automatisch dann, wenn bei Unterlass stehendem Getriebe die Übersetzungsstellung dahingehend geändert werden soll, dass sich damit eine Entleerung des Druckzylinders verbindet, was jedoch auch in diesem Falle für eine schnelle Änderung der Getriebeübersetzung nur förderlich ist.

Weitere erfindungswesentliche Merkmale und Einzelheiten ergeben sich aus der nachfolgenden Beschreibung von Ausführungsformen, die auf der Zeichnung dargestellt sind. In der Zeichnung zeigen:
- Figur 1: eine vereinfachte Ansicht eines stufenlos verstellbaren Kegelscheibengetriebes;
- Figur 2: die vergrößerte Schnittdarstellung der zweiten Getriebeseite aus Figur 1 mit mechanischer Erzeugung der Anpresskräfte in einer ersten Arbeitsstellung;
- Figur 3: den Gegenstand gemäß Figur 2 in einer anderen Arbeitsstellung;
- Figur 4: die Draufsicht auf den Gegenstand gemäß Figur 3, teilweise in Schnittansicht gemäß der Schnittlinie IV-IV in Figur 3;
- Figur 5: ein Einzelteil des Gegenstandes gemäß Figur bis 4 in Schnittansicht;
- Figur 6: die die Abwicklung der Kurvenstellung der Anpresseinrichtung gemäß Figur 2;
- Figur 7: die Abwicklung der Kurvenstellung der Anpresseinrichtung für eine andere Übersetzungsstellung;
- Figur 8: eine andere Bauform der Getriebeseite mit mechanischer Erzeugung der Anpresskräfte;
- Figur 9: die Schnittansicht IX-IX aus Figur 8;
- Figur 10: die Schnittansicht X-X aus Figur 8;
- Figur 11: ein Einzelteil aus Figur 8 in Axialansicht und zwei um 90° zueinander versetzten Schnittansichten und
- Figur 12 bis 14: drei Abwandlungen der aus Figur 1 ersichtlichen hydraulischen Steuerung.

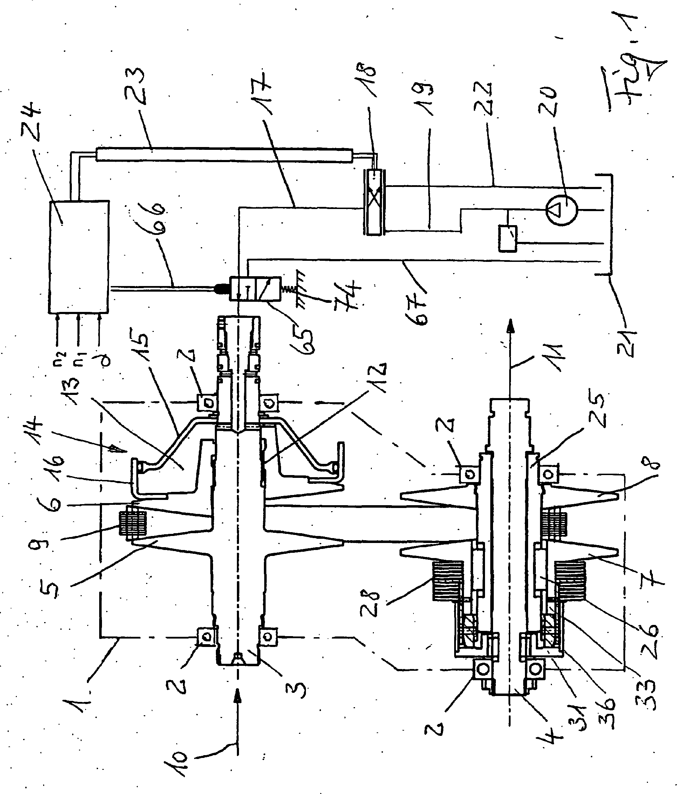

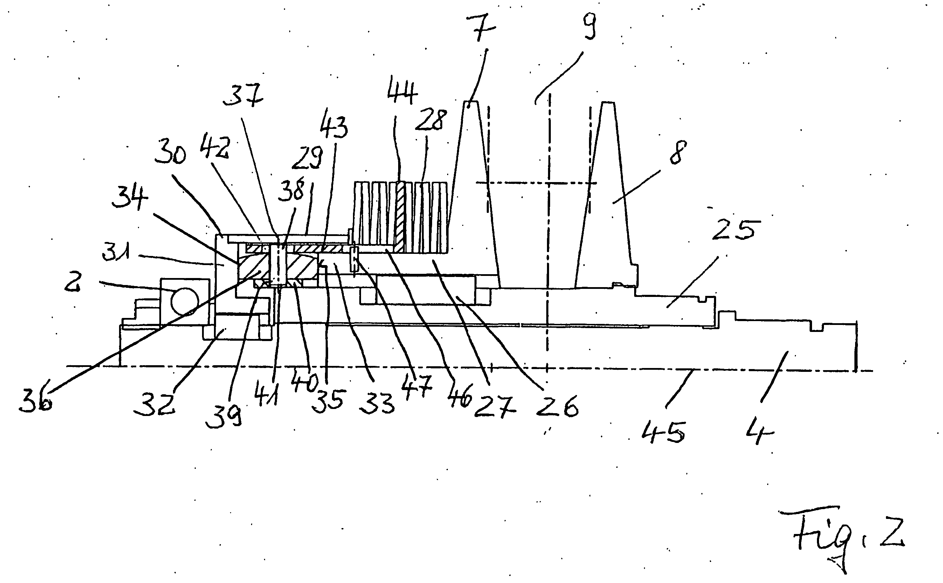

Das in Figur 1 dargestellte, stufenlos verstellbare Kegelscheibengetriebe ist in einem schematisch angedeuteten Gehäuse 1 enthalten und umfasst im wesentlichen über Lager 2 im Gehäuse 1 drehbare Wellen 3 und 4, auf denen Kegelscheiben 5 bis 8 angeordnet sind, zwischen denen ein Zugmittel 9 umläuft. Wie aus den Pfeilen 10, 11 ersichtlich, soll im dargestellten Falle die Welle 3 die Antriebswelle des Getriebes, die mit der Welle 3 verbundene Einheit also die erste Getriebeseite sein, während die Welle 4 die Abtriebswelle des Getriebes und die damit verbundene Einheit die zweite Getriebeseite ist.

Auf der Welle 3 ist die Kegelscheibe 5 drehfest und axial unverschiebbar, im vorliegenden Falle einstückig mit der Welle 3 verbunden angeordnet, während die Kegelscheibe 6 auf der Welle 3 axial verschiebbar, mit dieser aber beispielsweise über eine Kerbverzahnung 12 drehverbunden ist. Zur axialen Verstellung der Kegelscheibe 6 dient ein einen Druckraum 13 bildender Druckzylinder 14 mit wellenfestem Kolben 15, durch die Kegelscheibe 6 getragenem Zylindermantel 16 und durch die Kegelscheibe 6 selbstgebildetem Zylinderboden.

Der Druckzylinder 14 ist über eine Druckleitung 17 mit einem Steuerventil 18 verbunden, das über eine Leitung 19 mit der Druckseite einer Pumpe 20 verbunden ist, die Druckmittel aus einem Vorratsbehälter 21 ansaugen kann. Andererseits ist das Steuerventil 18 über eine Rücklaufleitung 22 direkt mit dem Vorratsbehälter 21 verbunden.

Je nach Stellung des Steuerventils 18 wird dem Druckraum 13 von der Pumpe 20 bezogenes Druckmittel zugeführt oder es kann das Druckmittel aus dem Zylinderraum 13 über die Leitung 17 und die Leitung 22 abfließen. Die zu diesem Rückfluss des Druckmittels gehörende Stellung des Steuerventils 18 ist in Figur 1 dargestellt.

Auf diese Weise dient das Steuerventil 18 der Einstellung und Aufrechterhaltung der Getriebeübersetzung, wozu die Betätigung des Steuerventils 18 über eine Leitung 23 durch eine Steuereinheit 24 erfolgt, der die erforderlichen Betriebsgrößen zugehen. Im vorliegenden Falle sind für das Beispiel eines Fahrzeugs als eingehende Betriebsgrößen eine Drehzahl n₁, beispielsweise die Motordrehzahl, eine Drehzahl n₂, beispielsweise die Fahrgeschwindigkeit, und die Drosselklappenstellung α des Motors angegeben.

Auf der Welle 4 der zweiten Getriebeseite sind die Kegelscheiben 7 und 8 auf einer auf der Welle 4 drehbar aber axial unverschiebbar gelagerten Hohlwelle 25 angeordnet, wobei die Kegelscheibe 8 mit der Hohlwelle 25 festverbunden ist, während die Kegelscheibe 7 auf der Hohlwelle 25 axial verschiebbar, mit dieser aber über eine Passfeder 26 undrehbar verbunden ist.

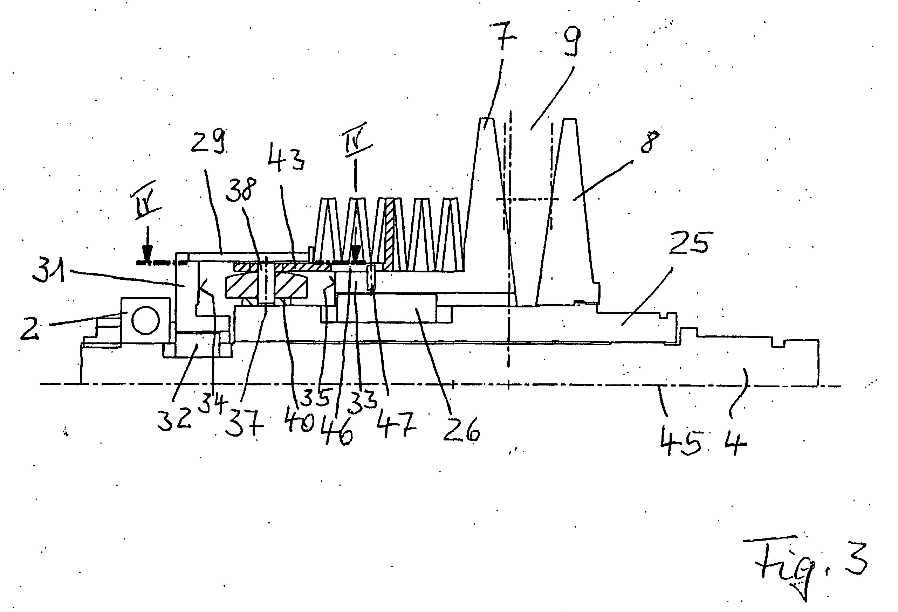

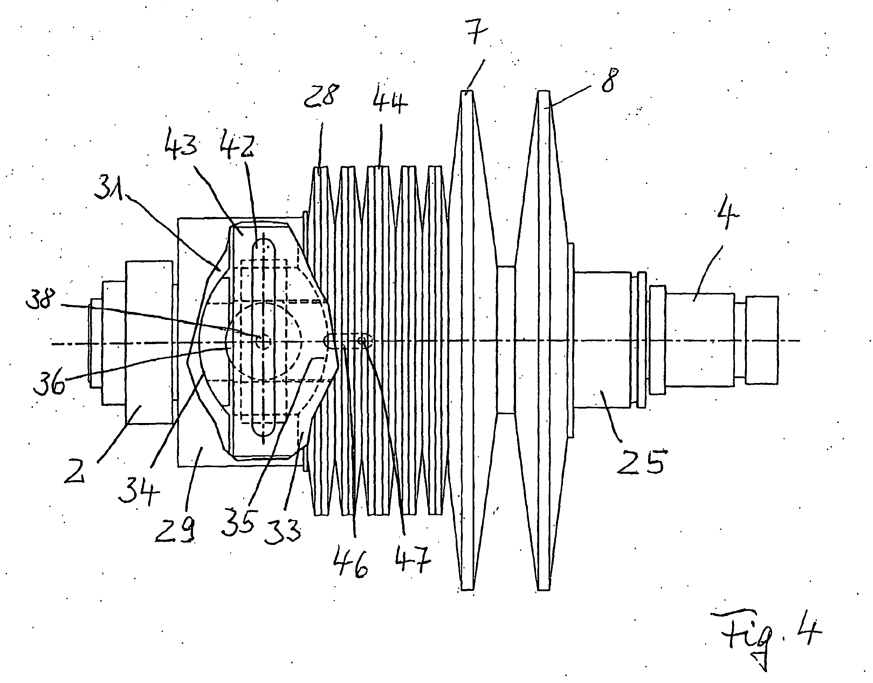

Auf die Kegelscheibe 7 wirken mechanische Mittel zur Erzeugung der gegenüber dem Zugmittel 9 erforderlichen Anpresskraft, die nunmehr anhand der Figur 2 erläutert werden, welche die zweite Getriebeseite aus Figur 1 in deren hälftiger Darstellung zeigt.

Wie aus Figur 2 ersichtlich, weist die Kegelscheibe 7 eine verlängerte Nabe 27 auf, auf der ein Paket von Tellerfedern 28 konzentrisch sitzt, das über ein hohlzylindrisches Zwischenstück 29 gegen den radial nach außen vorstehenden Bund 30 einer Kurvenmuffe 31 abgestützt ist, die an der Welle 4 zumindest von der Kegelscheibe 7 fort axial abgestützt und im übrigen mit der Welle 4 über eine Passfeder 32 drehfest verbunden ist. Das Tellerfederpaket 28 liefert so eine von der Axialstellung der Kegelscheibe 7 etwas abhängige, im wesentlichen aber gleichbleibende Axialkraft auf die Kegelscheibe 7 und damit auf den hier nur angedeuteten Zugmittelstrang 9, die als grundsätzliche Anpresskraft immer vorhanden ist und verhindert, dass das Zugmittel 9 gegenüber den Kegelscheiben durchrutschen kann.

Auf der der Kurvenmuffe 31 zugewandten Seite bildet die verlängerte Nabe der Kegelscheibe 7 ebenfalls eine Kurvenmuffe 33. Zwischen die so einander gegenüberstehenden Kurvenbahnen 34 bzw. 35 der Kurvenmuffen 31 bzw. 33 sind Rollkörper 36 eingelegt, die um zu der Welle 4 radial stehende Achsen 37 drehbar sind. Zur Lagerung dieser Rollkörper 36 weisen diese nach außen vorstehende Zapfen 38 und nach innen vorstehende Zapfen 39 auf. Innerhalb der Rollkörper 36 ist auf der Hohlwelle 25 ein umlaufender Haltering 40 angeordnet, der die Zapfen 39 in dazu passenden Bohrungen 41 aufnimmt. Außerhalb der Rollkörper 36 greifen die dort vorstehenden Zapfen 38 in Umfangsschlitze 42 eines Führungsringes 43 ein, dessen der axial verschiebbaren Kegelscheibe 7 zugewandtes Ende mit einem dort nach radial außen vorstehenden Bund 44 in der Längsmitte des Federpaketes 28 eingeklemmt ist und der über wenigstens eine zur Achse 45 der Welle 4 parallele Nut 46 und einen darin eingreifenden Radialstift 47 der Nabe 27 mit der Nabe 27 drehverbunden ist.

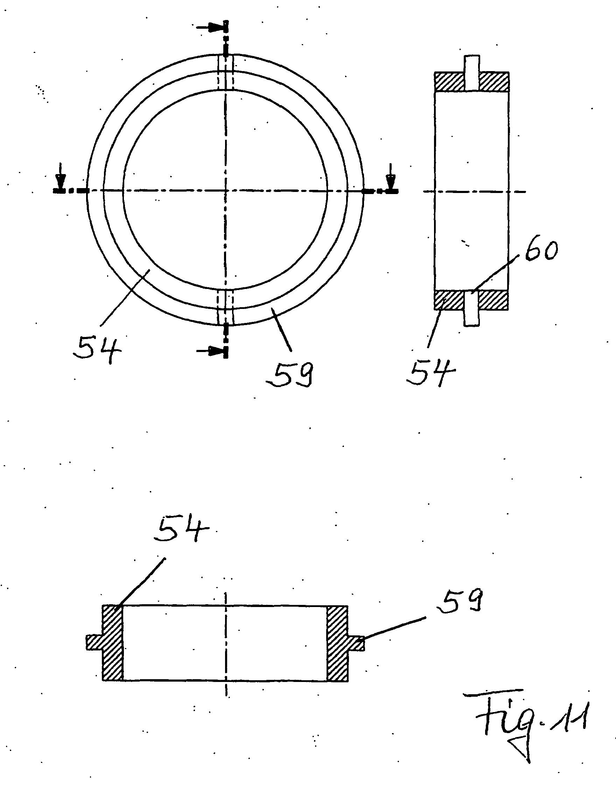

Das Aussehen des Führungsringes 43 ist noch einmal deutlicher aus Figur 5 ersichtlich, die diesen Führungsring im Radialschnitt zeigt. Figur 5 zeigt außerdem, dass für zwei einander gegenüberliegend angeordnete Rollkörper 36 entsprechend einander gegenüberliegende Umfangsschlitze 42 vorhanden sind, die sich über einen Bogen erstrecken, der kleiner als 180°, andererseits aber so groß ist, dass die Rollkörper 36 die betriebsbedingten Bewegungen entlang den Kurvenbahnen 34, 35 der durch die Rollkörper und die Kurvenmuffen 31, 33 gebildeten Anpresseinrichtung führen können.

Diese Kurvenbahnen 34, 35 sind in der der Figur 2 entsprechenden gegenseitigen Umfangsstellung mit Figur 6 veranschaulicht. Dazu ist zu sagen, dass die Kegelscheiben 7, 8 bei der in Figur 2 veranschaulichten Darstellung ihren größtmöglichen gegenseitigen Abstand haben, der der Maximalverstellung des Getriebes in zu langsamen Abtriebsdrehzahlen entspricht. Entsprechend sind auch die sich entlang dem Umfang erstreckenden Kurvenbahnen 34, 35 auf den geringstmöglichen gegenseitigen Abstand gestellt, so dass die Rollkörper 36 an den Kurvenbahnen im Bereich deren jeweiligen Kurvengrundes 48 bzw. 49 in Anlage sind. Tritt nun ein Drehmoment zwischen den Kurvenmuffen 31 und 33 auf, so wollen die Rollkörper 36 an den Kurvenbahnen 34 bzw. 35 hochlaufen, was zu einer Spreizkraft führt, die die Kurvenmuffen 31, 33 in Axialrichtung voneinander fortzubewegen sucht. Da die Kurvenmuffe 31 auf der Welle 4 axial fest abgestützt ist, geht die Spreizkraft über die Kurvenmuffe 33 und die Nabe 27 unmittelbar auf die Kegelscheibe 7 und führt dort zu einer Anpresskraft auf das Zugmittel 9, die der Größe des auftretenden und zur übertragenden Drehmomentes entspricht und die entsprechend der Neigung der Kurvenbahnen 34, 35 auch der zu der Übersetzungsstellung des Getriebes gehörenden Größe entspricht.

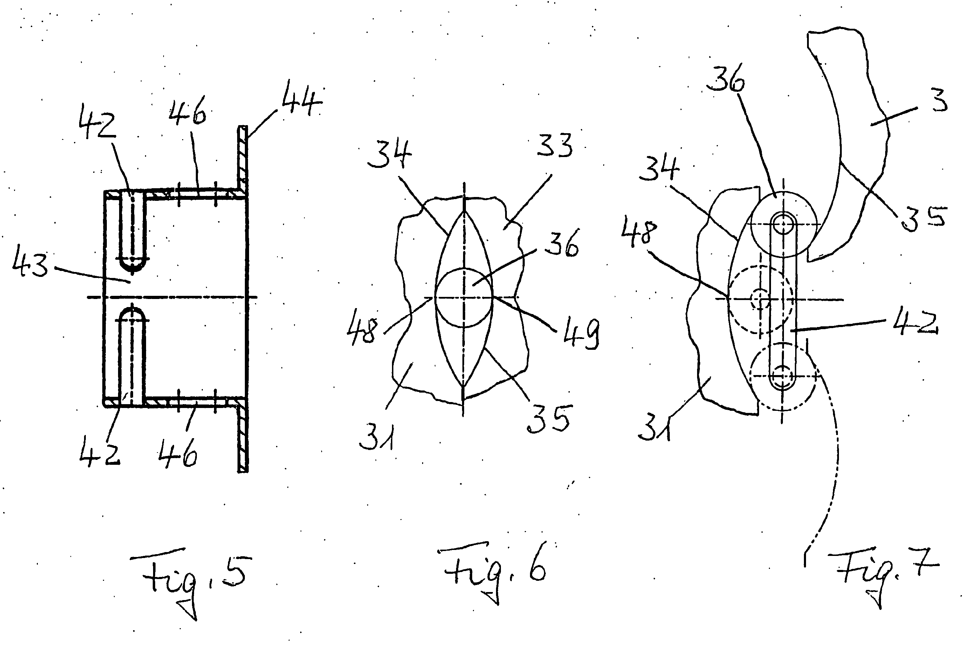

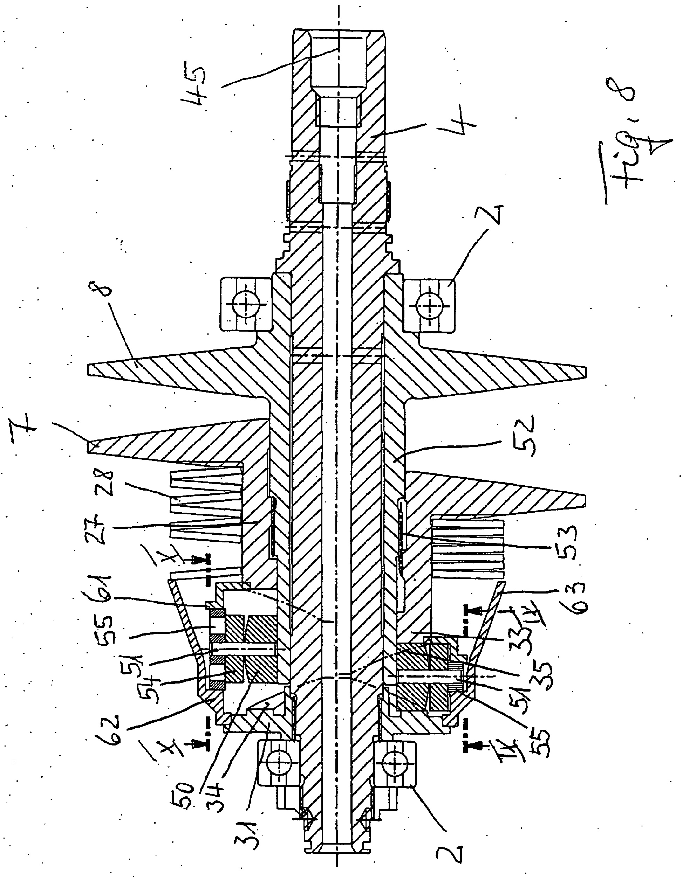

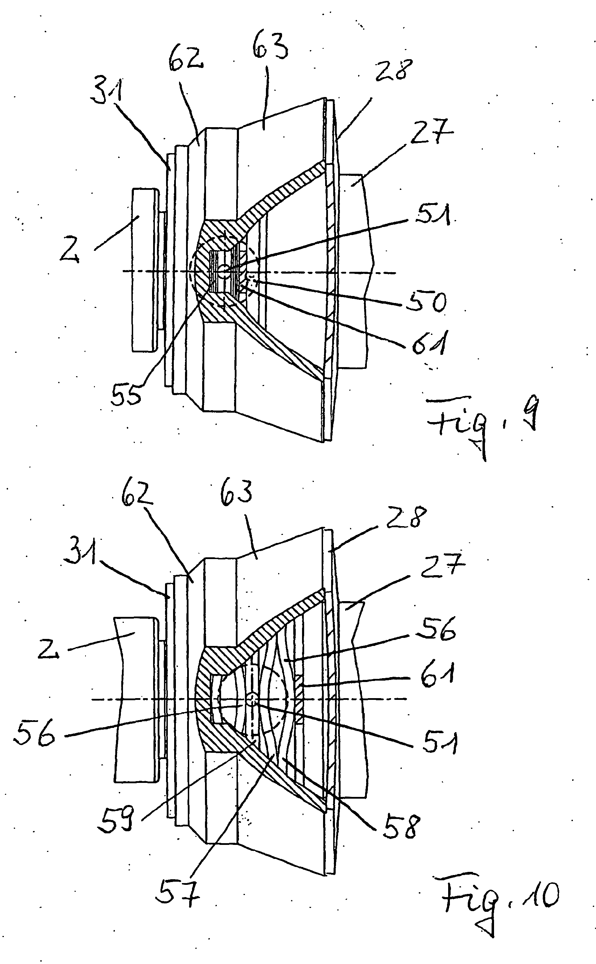

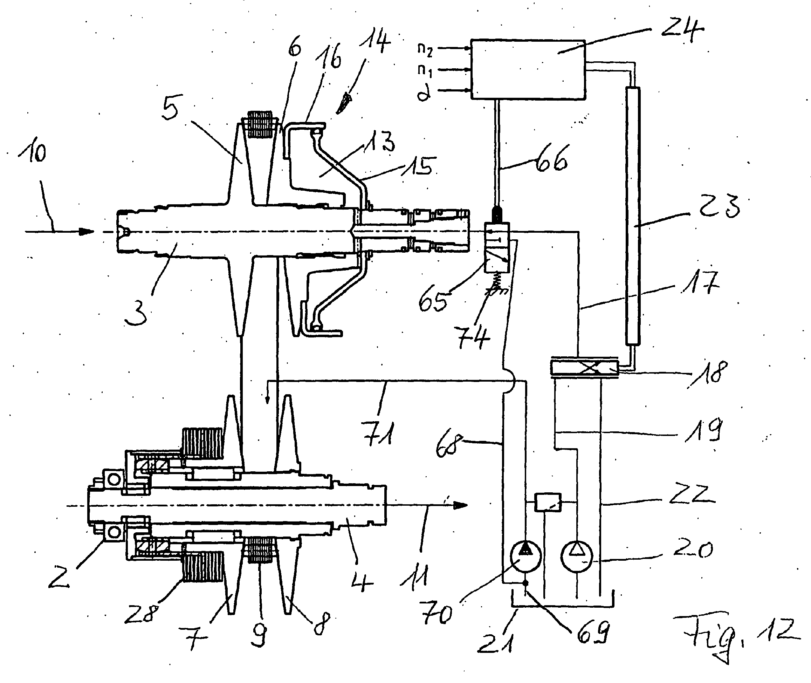

Die Figuren 3 und 4 zeigen den Gegenstand gemäß Figur 2 in der Übersetzungsstellung, bei der die Kegelscheiben 7, 8 ihren geringstmöglichen gegenseitigen Axialabstand haben, was die Übersetzungsstellung ist, bei der das Getriebe hin zu schnellstmöglichen Abtriebsdrehzahlen verstellt ist. Das bedingt, dass die Kurvenbahnen 34, 35 einen entsprechend größeren gegenseitigen Axialabstand aufweisen, wie dies aus Figur 7 ersichtlich ist. Hier liegen die Rollkörper 36 im Bereich der Enden der Kurvenbahnen 34, 35 an diesen an, wenn eine Drehmomentübertragung stattfindet.

Gerät zum Beispiel bei dieser Übersetzungsstellung das Getriebe in einen lastlosen bzw. Leerlaufzustand, so findet zwischen den Kurvenmuffen 31, 33 keine Drehnlomentübertragung statt, die die Rollkörper 36 im Bereich der Mitte zwischen den Kurvenbahnen 34, 35 festhält. Vielmehr ist die gegenseitige Winkellage der Kurvenmuffen 31, 33 unbestimmt. Dabei könnte es auch vorkommen, dass die Rollkörper die aus Figur 7 in gestrichelter Darstellung ersichtliche Position beispielsweise auf dem Kurvengrund 48 der Kurvenbahn 34 einnehmen. Treten nun wieder ein Drehmoment zwischen den Kurvenmuffen 31, 33 auf, so könnte sich die Kurvenbahn 35 in Umfangsrichtung an den Rollkörpern 36 vorbeibewegen, ohne mit diesen in Eingriff zu gelangen, was bedeutet, dass die Kurvenmuffe ohne die Möglichkeit einer Drehmomentenübertragung durchdrehen würde.

Die gleiche Situation könnte bezogen auf Figur 7 eintreten, wenn das Getriebe einer Drehrichtungsumkehr ausgesetzt wäre, also die Kurvenmuffe 33 aus der in Figur 7 oben gezeichneten Position in die in Figur 7 unten angedeutete Position umschlagen würde.

Um dem zu begegnen, dient der bereits beschriebene Führungsring 43. Da dieser mit seinem Bund 44 in etwa auf der Längsmitte des Tellerfederpaketes 28 an diesem angelängt ist, macht er die durch die Axialbewegung der Kegelscheibe 7 verursachte axial Längenänderung des Tellerfederpaketes 28 zur Hälfte mit, was dazu führt, dass die Rollkörper 36 durch ihren Eingriff mit den Umfangsschlitzen 42 immer im Bereich der axialen Mitte zwischen den Kurvenbahnen 34, 35 gehalten sind.

Aus der Abwicklung gemäß Figur 7 ist auch noch einmal die Länge der Umfangsschlitze 42 ersichtlich, die nämlich so groß sein muss, dass die Rollkörper 36 den aus Figur 7 ersichtlichen maximal in Umfangsrichtung auftretenden Weg passend zu beiden Drehrichtungen des Getriebes ausführen können.

Schließlich sei zu den Figuren 3 und 4 noch darauf hingewiesen dass dort in Abweichung von Figur 7 die Kurvenmuffen 31, 33 in der gegenseitigen Umfangsposition dargestellt sind, bei der die beiderseitigen Kurvenbahnen 34, 35 voll umfänglich einander gegenüber stehen. Auch eine solche beliebige Position ist bei lastlosem Lauf des Getriebes denkbar. Sie zeigt besonders deutlich, welche Bewegungsfreiheit die Rollkörper 36 in Axialrichtung der Welle 4 hätten, wenn sie nicht durch den Führungsring 43 und dessen Umfangsschlitze 42 auf der Mitte zwischen den beiden Kurvenbahnen 34 und 35 gehalten würden.

Die Figuren 8 bis 11 zeigen eine Abwandlung der anhand der Figuren 1 bis 7 veranschaulichten Bauform der zweiten Getriebeseite, wobei wiederkehrende Gegenstände mit den bereits eingeführten Bezugszeichen versehen sind. Dabei ist darauf hinzuweisen, dass Figur 8 in der unteren Hälfte der Darstellung den Abstand der Kegelscheiben 7, 8 entsprechend Figur 2 und die obere Hälfte der Darstellung den Abstand dieser Kegelscheiben entsprechend Figur 3 zeigt.

Wie aus den Figuren 8 bis 10 ersichtlich, weisen nunmehr die Rollkörper 50 nur noch ein nach radial außen vorstehenden Drehzapfen 51 auf, während sie radial innen unmittelbar gegen die Hohlwelle 52 abgestützt sind, die in diesem Falle einstückig mit der Kegelscheibe 8 verbunden ist und auf der wiederum die Kegelscheibe 7 diesmal jedoch mittels einer Kerbverzahnung 53 axial verschiebbar aber gegen Drehen gesichert ist.

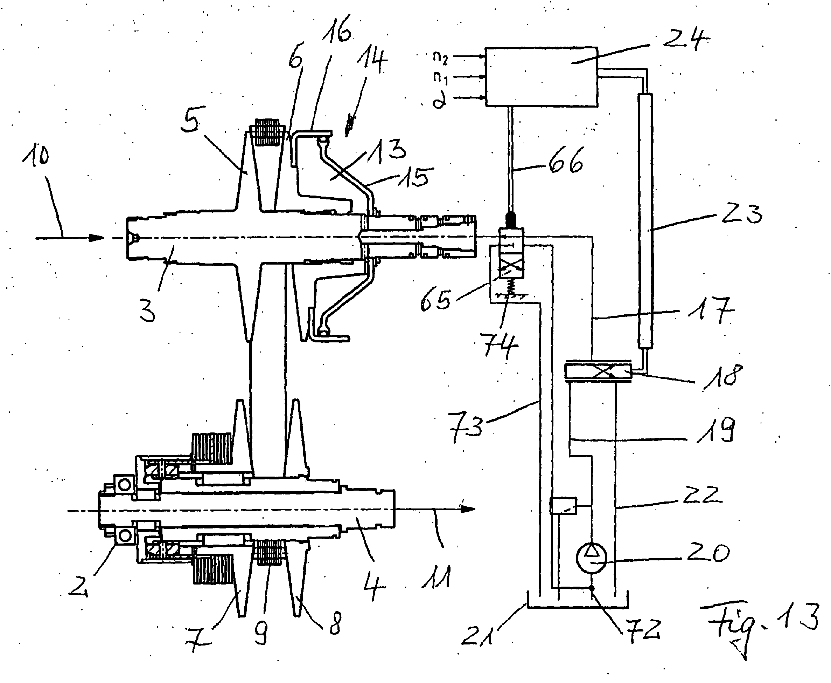

Die Zapfen 51 durchgreifen dazu passende Bohrungen eines radial außerhalb der Rollkörper 50 angeordneten Halteringes 54 und ragen weiterhin in einen außerhalb des Halteringes 54 angeordneten Führungsring 55, der aus zwei axial nebeneinander angeordneten Paketen von Wellfedern 56 besteht, wie diese am besten aus Figur 10 ersichtlich sind. Diese sich ringförmig über den Umfang erstreckenden Wellfedern 56 sind gegenseitig so angeordnet, dass sie mit aufeinander zu gerichteten Wellen 57, 58 aneinanderliegen, wo sie unlösbar, beispielsweise durch Schweißen miteinander verbunden sind.

Zwischen die Wellfederpakete ragen die Zapfen 51 der Rollkörper 50. Damit sie dort zusammen mit dem Haltering 54 auf der Mitte zwischen den Wellfederpaketen bleiben, weist der Haltering 54, wie dies aus Figur 11 ersichtlich ist, einen nach radial außen vorstehenden und zwischen die Wellfederpakete eingreifenden Bund 59 auf. Die axiale Dicke des Bundes 59 entspricht im vorliegenden Falle dem Durchmesser der Zapfen 51, so dass die radial nach außen weitergeführten Bohrungen 60 des Halterings 54 für die Zapfen 51 den Bund 59 teilen.

Die Pakete der Wellfedern 55 sind auf ihrer Außenseite axial einerseits gegen einen Bund 61 abgestützt, der vom freien Ende der Nabe 27 bzw. der dort gebildeten Kurvenmuffe 33 getragen ist. Auf der anderen Seite findet die Axialabstützung über einen Bund 62 statt, den die Kurvenmuffe 31 radial außen trägt.

Damit hier ebenso wie bei der anhand der Figuren 1 bis 7 beschriebenen Bauform die axiale Widerlagerung des Tellerfederpaketes 28 ebenfalls über die wellenfeste Kurvenmuffe 31 erfolgen kann, ist ein den Führungsring 55 axial übergreifendes, im wesentlichen hohlzylindrisches Zwischenstück 63 vorgesehen, das aus Gründen der Einfachheit vorliegend eine Baueinheit mit dem Bund 62 darstellt.

Entsprechend den beiden in Figur 8 gezeigten Axialabständen der Kegelscheiben 7 und 8 ist bei der unteren Hälfte der Figur 8, zu der die Ansicht gemäß Figur 9 gehört, der aus den Wellfedern 56 bestehende Führungsring 55 axial auf Block zusammengedrückt, während er in der oberen Darstellung der Figur 8, zu der auch die Figur 10 gehört, seine maximale axiale Ausdehnung aufweist. Wie ersichtlich, ist auch hier immer gewährleistet, dass die Röllkörper 50 auf der axialen Mitte zwischen den Kurvenmuffen 31, 33 gehalten sind, so dass ein Durchdrehen der die Kurvenmuffen enthaltenden Anpresseinrichtung in der anhand der Figur 7 geschilderten Weise nicht auftreten kann.

Mit der so vorstehend im einzelnen anhand der Figuren 2 bis 11 geschilderten Gestaltung der zweiten Getriebeseite lässt sich dort nunmehr eine drehmoment- und Übersetzungsabhängige Größe der auf das Zugmittel 9 ausgeübten Anpresskräfte erzeugen. Diese führt, um wieder auf die Darstellung gemäß Figur 1 zurückzukommen, bei der ersten Getriebeseite zu einer entsprechenden Spreizkraft, mit der das Zugmittel 9 die Kegelscheiben 5, 6 axial auseinanderzudrücken sucht. Um dem zur Aufrechterhaltung und Einstellung der Getriebeübersetzung zu begegnen, wird der Druckraum 13 des Druckzylinders 14 über das Steuerventil 18 mit einem entsprechenden Druckmitteldruck beaufschlagt.

Soll nun insbesondere beim Stillstand oder beim Leerlauf des Getriebes eine geänderte Übersetzungsstellung des Getriebes dahingehend eingestellt werden, dass dazu eine Entleerung des Druckraumes 13 erforderlich ist, so steht als Kraft zum Ausschieben des Druckmittels aus dem Druckraum 13 nur die Kraft der Feder 28 zur Verfügung, die auf die axial verschiebbare Kegelscheibe 7 der zweiten Getriebeseite wirkt. Denn diese Kraft versucht die Kegelscheibe 7 axial in Richtung auf die Kegelscheibe 8 zu verschieben, was über das Zugmittel 9 dazu führt, dass die Kegelscheibe 6 von der Kegelscheibe 5 axial fortbewegt wird. Da nun aber die Kraft der Feder 28 nur eine Grundgröße hat, die sicherstellen soll, dass das Zugmittel nicht lose zwischen den jeweiligen Kegelscheibenpaaren hängt, würde eine Entleerung des Druckraumes 13 über das Steuerventil 18 und die Rückflussleitung 22 entsprechend lange Zeit in Anspruch nehmen, eine Zeit, die vielfach nicht zur Verfügung steht oder unerwünscht ist.

Um dem zu begegnen, ist in der Druckmittelleitung 17 ein Umsteuerventil 65 angeordnet, das durch die Steuereinheit 24 über die Leitungsverbindung 66 betätigbar ist.

In der aus Figur 1 ersichtlichen Stellung lässt das Umsteuerventil 65 den vom Steuerventil 18 auf die Druckleitung 17 gelassenen hydraulischen Druck ungehindert in den Druckraum 13 passieren wie dies zur normalen Arbeitsweise des Getriebes gehört.

Tritt jedoch die geschilderte Notwendigkeit einer Getriebeverstellung im Stillstand bzw. im Leerlauf auf, wozu auch entsprechende Eingangsgrößen für die Steuereinheit 24 gehören, so bewirkt die Steuereinheit 24 eine Verstellung des Umsteuerventils 65 in die andere aus der Zeichnung ersichtliche Position, wodurch der Druckraum 13 mit einer Rückflussleitung 67 verbunden wird, die unmittelbar in den Druckmittelvorratsbehälter 21 geht. Diese Rückflussleitung 67 kann ohne Probleme im Querschnitt groß bemessen werden, so dass dem Abfließen des Druckmittels aus dem Druckraum 13 praktisch kein Widerstand entgegensteht. Auf diese Weise ist es auch mit Hilfe nur der Kraft der Feder 28 grundsätzlich möglich, den Druckraum 13 relativ schnell zur Veränderung der Übersetzungsstellung des Getriebes zu entleeren. Denn der Durchflusswiderstand des in Figur 1 ebenfalls in der Abflussstellung gezeichneten Steuerventils 18 ist damit überbrückt.

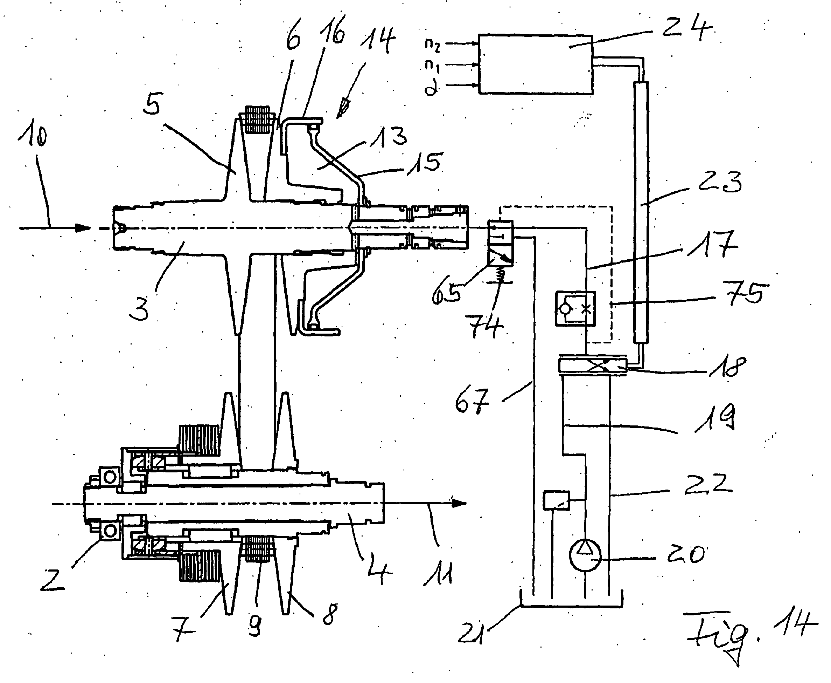

Eine Variante zu diesem anhand der Figur 1 geschilderten Gegenstand zeigt Figur 12, bei der im übrigen die bereits anhand der Figur 1 erläuterten Teile mit der dort bereits eingeführten Bezifferung versehen und nicht noch einmal beschrieben sind.

Gemäß Figur 12 ist die Rückflussleitung 68 des Umsteuerventils 65 mit der Saugseite 69 einer Pumpe 70 verbunden, die eine verhältnismäßig geringe Leistung aufweist, da sie über eine Druckleitung 71 an sich nur der Beölung des Zugmittels 9 dient. Immerhin führt jedoch bei der in Rede stehenden Getriebeverstellung die Verbindung des Druckraumes 13 mit der Saugseite der Pumpe 70 gegenüber dem anhand der Figur 1 beschriebenen Beispiel zu einer weiteren Steigerung der Geschwindigkeit, mit der der Druckraum 13 entleert und folglich die Kegelscheibe 6 axial von der Kegelscheibe 5 fortbewegt werden kann.

Eine weitere Variante zeigt Figur 13. Hier wird der Druckraum 13 zur Entleerung mit der Saugseite 72 der Pumpe 20 verbunden. Da diese zur Lieferung des der Aufrechterhaltung der Getriebeübersetzung dienenden Druckmitteldruckes eine verhältnismäßig hohe Leistung aufweist, steht an ihrer Saugseite 72 auch eine entsprechend große Saugleistung zur Verfügung, so dass nunmehr noch eine weitere Beschleunigung für die Entleerung des Druckraumes 13 gegeben ist.

Wie aus Figur 13 ersichtlich, wird bei der Verstellung des Umsteuerventiles 65 gleichzeitig die Druckleitung 17 mit einer Rückflussleitung 73 verbunden.

Allen drei anhand der Figuren 1, 12 und 13 geschilderten Ausführungsformen ist noch gemeinsam, dass das Umsteuerventil 65 der Betätigung durch die Steuereinheit 24 und damit zu seiner Betätigung eines entsprechenden Aufwandes bedarf. Um auch hier eine verbesserte Alternative anzugeben, kann die Bauform gemäß Figur 14 angewendet werden. Hier wird der in der Druckleitung 17 anstehende Druck über die Leitung 75 dazu herangezogen, das Steuerventil 65 von einer Seite aus gegen bzw. unter der Wirkung einer Stellfeder 74 zu betätigen.

Beim normalen Betrieb herrscht in der Druckmittelleitung 17 der zur Aufrechterhaltung der Getriebeübersetzung erforderliche und auf den Druckraum 13 zu leitende Druckmitteldruck. Unter diesem wird über die Leitung 75 das Umsteuerventil 65 gegen die Wirkung der Feder 74 in der dargestellten Position gehalten, bei der das Druckmittel über die Leitung 17 in den Druckraum 13 gelangen kann.

Tritt nun aber der Fall ein, dass das Getriebe hinsichtlich seiner Übersetzung im Stillstand bzw. im Leerlauf derart verstellt werden soll, dass dazu eine Entleerung des Druckraumes 13 erforderlich ist, so bedingt dies am Steuerventil 18 entsprechend der Vorgabe durch die Steuereinheit 24 die aus der Zeichnung ersichtliche Stellung, bei der die Druckleitung 17 mit der Rückflussleitung 22 verbunden ist. Damit ist die Druckleitung 17 praktisch drucklos, was ebenso für die Leitung 75 zutrifft, so dass nunmehr da Umsteuerventil 65 durch Wirkung der Feder 74 in die alternative Position verstellt werden kann. Dabei ist dann der Druckraum 13 mit der Rückflussleitung 67 verbunden, so dass das Druckmittel zweckmäßig über eine Leitung großen Querschnittes zum Druckmittelvorratsbehälter 21 abfließen kann.

## Patentansprüche

1. Kegelscheibengetriebe mit stufenloser Übersetzungseinstellung und Erzeugung axialer Anpresskräfte der Kegelscheiben auf ein zwischen diesen umlaufendes Zugmittel über Spannmittel, die auf den Getriebewellen angeordnet axial auf je eine auf der jeweiligen Getriebewelle axial verschiebbare Kegelscheibe wirken, wobei auf einer ersten Getriebeseite hydraulische Spannmittel zur Einstellung und Aufrechterhaltung der Getriebeübersetzung und auf der zweiten Getriebeseite eine gegen ein wellenfestes Widerlager abgestützte Feder als Spannmittel vorgesehen sind, wobei
auf der zweiten Getriebeseite eine axial feste (8) und eine axial bewegliche, mit einer verlängerten Nabe (27) versehene Kegelscheibe (7) die miteinander drehfest verbunden sind angeordnet sind, **dadurch gekennzeichnet, dass** die Kegelscheiben (7, 8) gemeinsam auf ihrer Getriebewelle (4) drehbar und mit der Wolle (4) über eine drehmoment- oder drehmoment- und übersetzungsabhängige Anpresseinrichtung gekoppelt sind,
dass die Anpresseinrichtung aus einer wellenfesten Kurvenmuffe (31), einer vom freien Ende der verlängerten Nabe (27) gebildeten Kurvenmuffe (33) und zwischen deren sich gegenüberliegenden Kurvenbahnen (34, 35) eingelegten, um zur Getriebewelle (4) radiale Achsen (37) drehbaren Rollkörpern (36, 50) zur Kraftübertragung besteht, dass die Rollkörper (36, 50) durch Ringe (40, 43, 54, 55) geführt, in gegenseitigem Abstand gehalten und in axial gefederter Weise auf den Bereich der axialen Mitte zwischen den Kurvenmuffen (31, 33) eingestellt sind, und dass die Feder (28) koaxial auf der verlängerten Nabe (27) angeordnet ist.

2. Kegelscheibengetriebe nach Anspruch 1,
**dadurch gekennzeichnet,**
**dass** die Kegelscheiben (7, 8) auf einer auf der Getriebewelle (4) drehbar aber axial unverschiebbar gelagerten Hohlwelle (25, 52) angeordnet sind, dass die axial feste Kegelscheibe (8) mit der Hohlwelle (25, 52) starr verbunden ist, dass die axial bewegliche Kegelscheibe (7) mit der Hohlwelle (25, 52) drehverbunden ist, und
**dass** die wellenfeste Kurvenmuffe (31) neben der Hohlwelle (25, 52) auf der Getriebewelle (4) drehfest und wenigstens von der ihr gegenüberliegenden Kurvenmuffe (33) fort axial unverschiebbar angeordnet ist.

3. Kegelscheibengetriebe nach Anspruch 2,
**dadurch gekennzeichnet,**
**dass** die axial feste Kegelscheibe (8) mit der Hohlwelle (52) einstückig verbunden ist.

4. Kegelscheibengetriebe nach einem der Ansprüche 1 bis 3,
**dadurch gekennzeichnet,**
**dass** die Rollkörper (36, 50) über radial zur Getriebewelle (4) von ihnen vorstehende, zu ihren Drehachsen (37) koaxiale Zapfen (38, 39, 51) mit entsprechenden Ausnehmungen (41, 42, 60) der Ringe (40, 43, 54, 55) in Eingriff sind.

5. Kegelscheibengetriebe nach Anspruch 4,
**dadurch gekennzeichnet,**
**dass** radial zur Getriebewelle (4) innerhalb oder außerhalb der Rollkörper (36, 50) ein zur Welle (4) koaxialer Haltering (40, 54) angeordnet ist, und dass die Zapfen (39, 51) der Rollkörper (36, 50) in zur Getriebewelle (4) radialen Bohrungen (41, 60) des Halteringes drehbar gelagert sind.

6. Kegelscheibengetriebe nach Anspruch 4 oder 5,
**dadurch gekennzeichnet,**
**dass** radial zur Getriebewelle (4) außerhalb der Rollkörper (36) ein diese und den verlängerte Nabe (27) umfangender Führungsring (43) in Form einer hohlzylindrischen Hülse angeordnet ist, dass der Führungsring (43) auf der verlängerten Nabe (27) axial verschiebbar aber dieser gegenüber undrehbar gelagert ist, dass nach außen vorstehende Zapfen (38) der Rollkörper (36) in sich entlang einer Radialebene der Getriebewelle (4) erstreckenden, in ihrer axialen Breite dem Durchmesser der Zapfen (38) entsprechenden Umfangsschlitzen (42) des Führungsringes. (43) drehbar gelagert und im Bereich der axialen Mitte zwischen den Kurvenmuffen (31, 33) gehalten sind, dass in Umfangsrichtung die Länge der Umfangsschlitze (42) wenigstens der Hälfte des maximalen gegenseitigen Umfangsweges der Kurvenmuffen (31, 33) der Anpresseinrichtung entspricht, und dass der Führungsring (43) mit seinem der axial beweglichen Kegelscheibe (7) zugewandten Ende derart an der Feder (28) angelangt ist, dass er gleichgerichtet jeweils im wesentlichen die Hälfte des Axialweges der beweglichen Kegelscheibe (7) ausführt.

7. Kegelscheibengetriebe nach Anspruch 6,
**dadurch gekennzeichnet,**
**dass** die Feder (28) einerseits gegen die axial bewegliche Kegelscheibe (7) und andererseits gegen die wellenfeste Kurvenmuffe (31) abgestützt ist.

8. Kegelscheibengetriebe nach Anspruch 6 oder 7,
**dadurch gekennzeichnet,**
**dass** die Feder (28) ein im wesentlichen zur Hälfte auf der Nabe (27), zur anderen Hälfte auf dem Führungsring (43) angeordnetes Tellerfederpaket ist, dass die Feder (28) gegen die Kurvenmuffe (31) über ein den Führungsring (43) umfangendes, hohlzylindrisches Zwischenstück (29) abgestützt ist, und dass der Führungsring (43) mit einem endständigen, nach radial außen gerichteten Bund (44) zwischen den beiden Hälften des Tellerfederpaketes (28) eingefangen ist.

9. Kegelscheibengetriebe nach einem der Ansprüche 6 bis 8,
**dadurch gekennzeichnet,**
**dass** der Führungsring (43) in seinem auf der Nabe (27) angeordneten Abschnitt wenigstens eine zur Achse (45) der Getriebewelle (4) parallele Nut (46) aufweist, in die ein von der Nabe (27) getragener Stift (47) zur Drehsicherung eingreift.

10. Kegelscheibengetriebe nach Anspruch 4 oder 5,
**dadurch gekennzeichnet,**
**dass** radial zur Getriebewelle (4) außerhalb der Rollkörper (50) ein diese umfangender Führungsring (55) in Form wenigstens eines Paketes von axial nebeneinander angeordneten, ringförmigen Wellfedern (56) mit entlang dem Umfang axial hin- und hergehenden Wellen (57, 58) angeordnet ist, dass dieser Führungsring (55) axial zwischen einem von der Nabe (27) und einem von der wellenfesten Kurvenmuffe (31) getragenen, umlaufenden Bund (61, 62) eingefangen und axial mittig zur Anpresseinrichtung gehalten ist, und dass nach radial außen vorstehende Zapfen (51) der Rollkörper (50) im Bereich der axialen Mitte dieses Führungsringes (55) drehbar gelagert sind.

11. Kegelscheibengetriebe nach Anspruch 10,
**dadurch gekennzeichnet,**
**dass** der Führungsring (55) aus zwei gleichen, axial nebeneinander angeordneten Paketen von Wettfedern (56) besteht, dass die Wellfedern (56) jedes Paketes über aufeinander zu gerichtete Wellenberge (57, 58) gegeneinander abgestützt und fest miteinander verbunden sind, und dass die Zapfen (51) der Rollkörper (50) zwischen den Wellfederpaketen drehbar gelagert sind.

12. Kegelscheibengetriebe nach Anspruch 11,
**dadurch gekennzeichnet,**
**dass** der Haltering (54) außerhalb der Rollkörper (50) zwischen diesen und dem Führungsring (55) aus Wellfedern (56) angeordnet ist und dass der Haltering (54) einen radial mittig von ihm nach radial außen vorstehenden, umlaufenden und zwischen die Wellfederpakete greifenden Bund (59) aufweist.

13. Kegelscheibengetriebe nach Anspruch 12,
**dadurch gekennzeichnet,**
**dass** die Bohrungen (60) des Halteringes (54) für die Zapfen (51) der Rollkörper (50) auch den Bund (59) durchqueren.

14. Kegelscheibengetriebe nach Anspruch 12 oder 13,
**dadurch gekennzeichnet,**
**dass** die axiale Breite des Bundes (59) der Dicke der Rollkörperzapfen (51) entspricht.

15. Kegetscheibengetriebe nach einem der Ansprüche 10 bis 14,
**dadurch gekennzeichnet,**
**dass** die Feder (28) auf der Nabe (27) angeordnet und einerseits gegen die axial bewegliche Kegelscheibe (7), andererseits über ein den Führungsring (55) übergreifendes, im wesentlichen hohlzylindrisches Zwischenstück (63) gegen die wellenfeste Kurvenmuffe (31) abgestützt ist.

16. Kegelscheibengetriebe nach Anspruch 15,
**dadurch gekennzeichnet,**
**dass** der von der wellenfesten Kurvenmuffe (31) getragene Bund (62) und das Zwischenstück (63) zu einem Bauteil vereinigt sind.

17. Kegelscheibengetriebe nach einem oder mehreren der Ansprüche 1 bis 16,
wobei die hydraulischen Spannmittel die zugeordnete axialverschiebbare Kegelscheibe (6) als Boden eines mit der Kegelscheibe verbundenen Druckzylinders (14) enthalten, welcher mit einem wellenfesten Kolben (15) einen Druckraum (13) bildet, dem mittels einer Druckmittelzuflussleitung (17) von einer Pumpe (20) aus einem Druckmittelvorrat (21) bezogenes Druckmittel in durch ein Steuerventil (18) zur Einstellung und Aufrechterhaltung der Getriebeübersetzung bestimmter Weise zugeführt wird,
**dadurch gekennzeichnet,**
**dass** in der Druckmittelzuflussleitung (17) ein Umsteuerventil (65) angeordnet ist, und dass durch das Umsteuerventil (65) der Druckraum (13) mit dem Druckmittelvorrat (21) oder der Saugseite (69, 72) einer Druckmittelpumpe (70, 20) verbindbar ist.

18. Kegelscheibengetriebe nach Anspruch 17,
**dadurch gekennzeichnet,**
**dass** das Umsteuerventil (65) durch die Steuerung (24) für das Steuerventil (18) betätigbar ist.

19. Kegelscheibengetriebe nach Anspruch 17,
**dadurch gekennzeichnet,**
**dass** das Umsteuerventil (65) durch den in der Druckmittelzuflussleitung (17) herrschenden Druckmitteldruck betätigbar ist.

## Claims

1. Bevel gear unit with continuous gearing adjustment and generation of axial contact pressures of the bevel gears on a traction means, which rotates between the bevel gears, by way of tensioning means which are disposed on the gear shafts and each act axially on a bevel gear which is displaceable axially on the respective gear shaft, wherein hydraulic tensioning means are provided on a first side of the gear unit for adjusting and maintaining the gearing of the gear unit and a spring which is braced against a support fixed on the shaft is provided as tensioning means on the second side of the gear unit, wherein an axially fixed bevel gear (8) and an axially movable bevel gear (7) provided with an extended hub (27) are disposed on the second side of the gear unit and are non-rotatably connected to one another, **characterised in that** the bevel gears (7, 8) are jointly rotatable on their gear shaft (4) and are coupled to the shaft (4) by way of a pressing device which is dependent upon the torque or the torque and the gearing, that the pressing device comprises a cam sleeve (31) which is fixed on the shaft, a cam sleeve (33) formed by the free end of the extended hub (27) and roll bodies (36, 50) for the transmission of force which are inserted between opposing cam paths and are rotatable about axes which radial with respect to the gear shaft, that the roll bodies (36, 50) are guided by rings (40, 43, 54, 55), are retained with reciprocal spacing and are adjusted by axial springing on the region of the axial centre between the cam sleeves (31, 33), and that the spring (28) is disposed coaxially on the extended hub (27).

2. Bevel gear unit as claimed in Claim 1, **characterised in that** the bevel gears (7, 8) are disposed on a hollow shaft (25, 52) which is mounted on the gear shaft (4) s that it can rotate but cannot be axially displaced, that the axially fixed bevel gear (8) is rigidly connected to the hollow shaft (25, 52), that the axially movable bevel gear (7) is joined in rotation with the hollow shaft (25, 52), and that the cam sleeve (31) which is fixed on the shaft is disposed adjacent,to the hollow shaft (25, 52) on the gear shaft (4) so that it is rotatable along and cannot be displaced, at least not axially away from the cam sleeve (33) lying opposite it.

3. Bevel gear unit as claimed in Claim 2, **characterised in that** the axially fixed bevel gear (8) is integrally connected the hollow shaft (52).

4. Bevel gear unit as claimed in any one of Claims 1 to 3, **characterised in that** the roll bodies (36, 50) engage in corresponding recesses (41, 42, 60) on the rings (40, 43, 54, 55) by way of lugs (38, 39, 51) which are coaxial with their axes of rotation (37) and project from the roll bodies radially with respect to the gear shaft (4).

5. Bevel gear unit as claimed in Claim 4, **characterised in that** a retaining ring (40, 54) which is coaxial with the shaft (4) is disposed radially with respect to the gear shaft (4) inside or outside the roll bodies (36, 50), and that the lugs (39, 51) on the roll bodies (36, 50) are rotatably mounted in bores (41, 60) in the retaining ring which extend radially with respect to the gear shaft (4).

6. Bevel gear unit as claimed in Claim 4 or 5, **characterised in that** a guide ring (43) in the form of a hollow cylindrical sleeve is disposed radially with respect to the gear shaft (4) outside the roll bodies (36) and encircles these roll bodies and the extended hub (27), that the guide ring (43) is mounted on the extended hub (27) so as to be axially displaceable but non-rotatable relative thereto, that outwardly projecting lugs (38) on the roll bodies (36) are rotatably mounted in circumferential slots (42) on the guide ring (43) which extend along a radial plane of the gear shaft (4) and correspond in their axial width to the diameter of the lugs (38) and the said lugs are retained in the region of the axial centre between the cam sleeves (31, 33), that in the circumferential direction the length of the circumferential slots (42) corresponds to at least half the maximum reciprocal circumferential path of the cam sleeves (31, 33) of the pressing device, and that the end of the guide ring (43) facing the axially movable bevel gear (7) is formed as extension on the spring (28) in such a way that it travels in the same direction in each case over substantially half of the axial path of the movable bevel gear (7).

7. Bevel gear unit as claimed in Claim 6, **characterised in that** the spring (28) is braced on one side against the axially movable bevel gear (7) and on the other side against the cam sleeve (31) which is fixed on the shaft.

8. Bevel gear unit as claimed in Claim 6 or 7, **characterised in that** the spring (28) is basically a set of cup springs of which one half is disposed on the hub (27) and the other half on the guide ring (43), that the spring (28) is braced against the cam sleeve (31) by way of a hollow cylindrical intermediate piece (20) which encircles the guide ring (43), and that the guide ring (43) with a collar (44) directed radially outwards on the end is captured between the two halves of the set of cup springs (28).

9. Bevel gear unit as claimed in any one of Claims 6 to 8, **characterised in that** the portion of the guide ring (43) disposed on the hub (27) has at least one groove (46) which extends parallel to the axis (45) of the gear shaft (4) and in which a pin (47) which is supported by the hub (27) engages for securing against rotation.

10. Bevel gear unit as claimed in Claim 4 or 5, **characterised in that** a guide ring (50) in the form of at least one set of annular corrugated springs (56) disposed axially adjacent to one another is disposed radially with respect to the gear shaft (4) outside the roll bodies (36) and encircles the latter and has corrugations going to and from in the axial direction along the circumference, that this guide ring (55) is captured axially between a rotating collar (61, 62) supported by the hub (27) and one supported by the cam sleeve (31) which is fixed on the shaft and is held axially centred relative to the pressing device, and that lugs (51) which project radially outwards on the roll bodies (50) are rotatably mounted in the region of the axial centre of this guide ring (55).

11. Bevel gear unit as claimed in Claim 10, **characterised in that** the guide ring (55) comprises two identical sets of corrugated springs (56) disposed axially adjacent to one another, that the corrugated springs (56) of each set are braced against one another by way of corrugation peaks (57, 58) directed towards one another and are firmly connected to one another, and that the lugs (51) on the roll bodies (50) are rotatably mounted between the sets of corrugated springs.

12. Bevel gear unit as claimed in Claim 11, **characterised in that** the retaining ring (54) is disposed outside the roll bodies (50) between these roll bodies and the guide ring (55) of corrugated springs (56), and that the retaining ring (54) has a rotating collar (59) which at the centre projects radially outwards from the holding ring and engages between the sets of corrugated springs.

13. Bevel gear unit as claimed in Claim 12, **characterised in that** the bores (60) in the holding ring (54) for the lugs (51) on the roll bodies (50) also pass through the collar (59).

14. Bevel gear unit as claimed in Claim 12 or 13, **characterised in that** the axial width of the collar (59) corresponds to the width of the roll body lugs (51).

15. Bevel gear unit as claimed in any one of Claims 10 to 14, **characterised in that** the spring (28) is disposed on the hub (27) and on the one hand is braced against the axially movable bevel gear (7) and on the other hand is braced against the cam sleeve (31) fixed on the shaft by way of a substantially hollow cylindrical intermediate piece which engages over the guide ring (55).

16. Bevel gear unit as claimed in Claim 15, **characterised in that** the collar (62) supported by the cam sleeve (31) fixed on the shaft and the intermediate segment (63) are combined into one component.

17. Bevel gear unit as claimed in any one of Claims 1 to 16, wherein the hydraulic tensioning means contains the associated axially displaceable bevel gear (6) as the base of a pressure cylinder (14) connected to the bevel gear, and together with a piston (15) fixed on the shaft the said pressure cylinder forms a pressure chamber (13) to which a pressure medium taken from a pressure medium reservoir (21) is supplied by a pump (20) by means of a pressure medium supply line (17) in a manner determined by a control valve (18) for adjusting and maintaining the gearing of the gear unit, **characterised in that** a reversing valve (65) is disposed in the pressure medium supply line (17), and that the pressure chamber (13) can be connected to the pressure medium reservoir (21) or the intake side (69, 72) of a pressure medium pump (70, 20) by the reversing valve (65).

18. Bevel gear unit as claimed in Claim 17, **characterised in that** the reversing valve (65) can be actuated by the control (24) for the control valve (18).

19. Bevel gear unit as claimed in Claim 17, **characterised in that** the reversing valve (65) can be actuated by the pressure of the pressure medium prevailing in the pressure medium supply line (17).

## Revendications

1. Variateur à poulies coniques avec réglage en continu de la démultiplication et production, via des moyens de serrage qui en étant disposés sur les arbres du variateur agissent sur une poulie conique respective pouvant être déplacée axialement sur l'arbre de variateur respectif, de forces axiales de pression des poulies coniques sur un moyen de traction circulant entre celles-ci, sachant que des moyens de serrage hydrauliques sont prévus sur un premier côté du variateur pour régler et maintenir la démultiplication du variateur et qu'un ressort s'appuyant contre un élément de contre-appui solidaire de l'arbre est prévu comme moyen de serrage sur le deuxième côté du variateur, et sachant qu'une poulie conique axialement fixe (8) et une poulie conique axialement mobile (7), pourvue d'un moyeu prolongé (27), sont disposées sur le deuxième côté du variateur, poulies qui sont mutuellement liées en rotation,
**caractérisé en ce que** les poulies coniques (7, 8) sont conjointement rotatives sur leur arbre de variateur (4) et sont couplées à l'arbre (4) via un mécanisme presseur agissant en fonction du couple de rotation ou en fonction du couple de rotation et de la démultiplication, **en ce que** le mécanisme presseur est constitué d'un manchon à came (31) solidaire de l'arbre, d'un manchon à came (33) formé par l'extrémité libre du moyeu prolongé (27), et de corps roulants (36, 50) pour la transmission de force, qui sont insérés entre les pistes de came se faisant face (34, 35) desdits manchons et qui sont rotatifs autour d'axes (37) radiaux par rapport à l'arbre de variateur (4), **en ce que** les corps roulants (36, 50) sont, en étant guidés par des bagues (40, 43, 54, 55), maintenus à distance mutuelle et établis, axialement par ressort, dans la région du milieu axial entre les manchons à came (31, 33), et **en ce que** le ressort (28) est disposé coaxialement sur le moyeu prolongé (27).

2. Variateur à poulies coniques selon la revendication 1, **caractérisé en ce que** les poulies coniques (7, 8) sont disposées sur un arbre creux (25, 52) monté à rotation mais en fixité axiale sur l'arbre de variateur (4), **en ce que** la poulie conique axialement fixe (8) est assemblée rigidement à l'arbre creux (25, 52), **en ce que** la poulie conique axialement mobile (7) est solidaire en rotation de l'arbre creux (25, 52), et **en ce que** le manchon à came (31) solidaire de l'arbre est disposé à côté de l'arbre creux (25, 52) sur l'arbre de variateur (4), en solidarité de rotation et sans possibilité de déplacement axial au moins en éloignement du manchon à came (33) qui lui fait face.

3. Variateur à poulies coniques selon la revendication 2, **caractérisé en ce que** la poulie conique axialement fixe (8) est assemblée d'un seul tenant à l'arbre creux (52).

4. Variateur à poulies coniques selon l'une des revendications 1 à 3, **caractérisé en ce que** les corps roulants (36, 50) sont, par l'intermédiaire de tenons (38, 39, 51) qui font saillie d'eux radialement par rapport à l'arbre de variateur (4) et sont coaxiaux à leurs axes de rotation (37), en prise avec des évidements correspondants (41, 42, 60) des bagues (40, 43, 54, 55).

5. Variateur à poulies coniques selon la revendication 4, **caractérisé en ce qu'**une bague de maintien (40, 54) coaxiale à l'arbre (4) est disposée, radialement par rapport à l'arbre de variateur (4), à l'intérieur ou à l'extérieur des corps roulants (36, 50), et **en ce que** les tenons (39, 51) des corps roulants (36, 50) sont montés à rotation dans des perçages (41, 60) de la bague de maintien qui sont radiaux par rapport à l'arbre de variateur (4).

6. Variateur à poulies coniques selon la revendication 4 ou 5, **caractérisé en ce qu'**une bague de guidage (43) sous la forme d'une douille cylindrique creuse est disposée, radialement par rapport à l'arbre de variateur (4), à l'extérieur des corps roulants (36), bague qui entoure ceux-ci et le moyeu prolongé (27), **en ce que** la bague de guidage (43) est disposée sur le moyeu prolongé (27) à déplacement axial mais sans possibilité de rotation par rapport à ce dernier, **en ce que** des tenons (38), faisant saillie vers l'extérieur, des corps roulants (36) sont, dans des fentes circonférentielles (42) de la bague de guidage (43) qui s'étendent le long d'un plan radial de l'arbre de variateur (4) et correspondent par leur largeur axiale au diamètre des tenons (38), montés à rotation et maintenus dans la région du milieu axial entre les manchons à came (31, 33), **en ce que**, en direction circonférentielle, la longueur des fentes circonférentielles (42) correspond au moins à la moitié de la course circonférentielle mutuelle maximale des manchons à came (31, 33) du mécanisme presseur, et **en ce que** la bague de guidage (43) est, par son extrémité tournée vers la poulie conique axialement mobile (7), articulée au ressort (28) de telle sorte qu'elle accomplit chaque fois, dans le même sens, sensiblement la moitié de la course axiale de la poulie conique axialement mobile (7).

7. Variateur à poulies coniques selon la revendication 6, **caractérisé en ce que** le ressort (28) s'appuie d'une part contre la poulie conique axialement mobile (7) et d'autre part contre le manchon à came (31) solidaire de l'arbre.

8. Variateur à poulies coniques selon la revendication 6 ou 7, **caractérisé en ce que** le ressort (28) est un groupe de rondelles-ressorts disposé sensiblement pour moitié sur le moyeu (27) et pour moitié sur la bague de guidage (43), **en ce que** le ressort (28) s'appuie contre le manchon à came (31) par l'intermédiaire d'une pièce intercalaire (29) cylindrique creuse entourant la bague de guidage (43), et **en ce que** la bague de guidage (43) est, par un collet terminal (44) dirigé radialement vers l'extérieur, piégée entre les deux moitiés du groupe de rondelles-ressorts (28).

9. Variateur à poulies coniques selon l'une des revendications 6 à 8, **caractérisé en ce que** la bague de guidage (43) présente, dans sa partie disposée sur le moyeu (27), au moins une rainure (46) qui est parallèle à l'axe de l'arbre de variateur (4) et dans laquelle s'engage, pour le blocage en rotation, une broche (47) portée par le moyeu (27).

10. Variateur à poulies coniques selon la revendication 4 ou 5, **caractérisé en ce qu'**une bague de guidage (55), sous la forme d'au moins un groupe de ressorts ondulés annulaires (56) disposés en juxtaposition axiale et pourvus d'ondulations (57, 58) axialement alternantes sur la circonférence, est disposée, radialement par rapport à l'arbre de variateur (4), à l'extérieur des corps roulants (50), bague qui entoure ces derniers, **en ce que** cette bague de guidage (55) est piégée axialement entre un collet entourant (61) porté par le moyeu (27) et un collet entourant (62) porté par le manchon à came (31) solidaire de l'arbre et est maintenue axialement centralement par rapport au mécanisme presseur, et **en ce que** des tenons (51), faisant saillie radialement vers l'extérieur, des corps roulants (50) sont montés à rotation dans la région du milieu axial de cette bague de guidage (55).

11. Variateur à poulies coniques selon la revendication 10, **caractérisé en ce que** la bague de guidage (55) est constituée de deux groupes identiques de ressorts ondulés (56) qui sont disposés en juxtaposition axiale, **en ce que** les ressorts ondulés (56) de chaque groupe sont fixement assemblés entre eux et se soutiennent mutuellement via des sommets d'ondulations (57, 58) orientés en vis-à-vis, et **en ce que** les tenons (51) des corps roulants (50) sont montés à rotation entre les groupes de ressorts ondulés.

12. Variateur à poulies coniques selon la revendication 11, **caractérisé en ce que** la bague de maintien (54) est disposée à l'extérieur des corps roulants (50) entre ceux-ci et la bague de guidage (55) constituée de ressorts ondulés (56), et **en ce que** la bague de maintien (54) présente un collet entourant (59) qui fait saillie d'elle radialement centralement, radialement vers l'extérieur, et qui s'engage entre les groupes de ressorts ondulés.

13. Variateur à poulies coniques selon la revendication 12, **caractérisé en ce que** les perçages (60) de la bague de maintien (54), destinés aux tenons (51) des corps roulants (50), traversent également le collet (59).

14. Variateur à poulies coniques selon la revendication 12 ou 13, **caractérisé en ce que** la largeur axiale du collet (59) correspond à l'épaisseur des tenons (51) des corps roulants.

15. Variateur à poulies coniques selon l'une des revendications 10 à 14, **caractérisé en ce que** le ressort (28) est disposé sur le moyeu (27) et s'appuie d'une part contre la poulie conique axialement mobile (7) et d'autre part, par l'intermédiaire d'une pièce intercalaire (63) essentiellement cylindrique creuse engageant en recouvrement la bague de guidage (55), contre le manchon à came (31) solidaire de l'arbre.

16. Variateur à poulies coniques selon la revendication 15, **caractérisé en ce que** le collet (62) porté par le manchon à came (31) solidaire de l'arbre et la pièce intercalaire (63) sont réunis en un élément.

17. Variateur à poulies coniques selon l'une ou plusieurs des revendications 1 à 16, sachant que les moyens de serrage hydrauliques contiennent la poulie conique axialement mobile associée (6) en tant que fond d'un cylindre hydraulique (14) qui est assemblé à la poulie conique et qui forme avec un piston (15) solidaire de l'arbre une chambre de pression (13) à laquelle du fluide hydraulique tiré par une pompe (20) d'un réservoir (21) de fluide hydraulique est, via une conduite (17) d'alimentation en fluide hydraulique, apporté d'une manière déterminée par un distributeur de commande (18) afin de régler et de maintenir la démultiplication du variateur,
**caractérisé en ce qu'**un distributeur d'inversion (65) est disposé dans la conduite (17) d'alimentation en fluide hydraulique, et **en ce que** la chambre de pression (13) peut, par le distributeur d'inversion (65), être reliée au réservoir (21) de fluide hydraulique ou au côté d'aspiration (69, 72) d'une pompe (70, 20) de fluide hydraulique.

18. Variateur à poulies coniques selon la revendication 17, **caractérisé en ce que** le distributeur d'inversion (65) peut être actionné par la commande (24) pour le distributeur de commande (18).

19. Variateur à poulies coniques selon la revendication 17, **caractérisé en ce que** le distributeur d'inversion (65) peut être actionné par la pression hydraulique qui règne dans la conduite (17) d'alimentation en fluide hydraulique.
